# EUROPEAN PATENT APPLICATION

(11) **EP 0 879 976 A1**
(43) Date of publication of application: **25.11.1998**
(21) Application number: 98303556.9
(22) Date of filing: 06.05.1998
(51) Int. Cl.: F16H 19/04, B23Q 1/58, F16H 25/08

(54) **Motion transforming apparatus**

(30) Priority: 20.05.1997 JP 129235/97
(71) Applicant: TEIJIN SEIKI COMPANY LIMITED, Osaka (JP)
(72) Inventor: Takenaka, Hiroyuki, c/o Teijin Seiki Co., Ltd., Fuwa-gum, Gifu (JP)
(74) Representative: Murnane, Graham John

(57) **Abstract**

Apparatus (50) for transforming an input rotary motion into a linear motion, comprising first and second rotation shafts (54, 55) each formed with eccentric crank shaft portions ((56A, 56B, 56C or 56D) or (57A, 57B, 57C or 57D)), a plate assembly (60) constituted by rotation plates (61A, 61B, 61C or 61D) each formed with teeth (64) and cranked through bores ((66A, 66B, 66C or 66D) or (67A, 67B, 67C or 67D)) respectively having the crank shaft portions ((56A, 56B, 56C or 56D) or (57A, 57B, 57C or 57D)) of the rotation shafts (54, 55) received therein, a toothed rail (80) having teeth (83), a plate assembly housing (100) relatively movable along the toothed rail (80), and guiding means (120) for guiding the plate assembly housing (100) and the toothed rail (80) with respect to each other along the longitudinal axis (80a) of the toothed rail (80), wherein the toothed rail (80) further comprises first and second shoulder portions (85R, 85L) extending in parallel relationship with the longitudinal axis (80a) of the toothed rail (80), each of the first and second shoulder portions (85R, 85L) including upper and lower inclined surfaces (87, 88) each having laterally inner and outer edge lines ((87a, 88a), (87b, 88b)) both extending in parallel in relationship with the longitudinal axis (80a) of the toothed rail (80), laterally outwardly converged in such a way to have the distance (N) between the laterally outer edge lines (87b, 88b) smaller than the distance (O) between the laterally inner edge lines (87a, 88a), each of the shoulder portions (85R, 85L) further including a side surface (89) being positioned between the outer edge lines (87b, 88b) of the first and second inclined surfaces (87, 88).

## Description

### FIELD OF THE INVENTION

The present invention relates to a motion transforming apparatus for transforming an input rotation motion into a linear motion, and in particular to a motion transforming apparatus comprising a pair of rotation shafts adapted to crank and rotate a set of rotation plates to have the rotation plates held in mesh with a toothed rail and move relatively with respect to the toothed rail.

### DESCRIPTION OF THE PRIOR ART

Conventionally, there have been proposed a wide variety of motion transforming apparatuses of this kind which are utilized in machine tools, robots, vehicles, feeding machines and the like. The motion transforming apparatuses are each required to be of compact size and light weight as well as simple structure for compactness of the machine tools, robots, vehicles, feeding machines or the like.

The prior art motion transforming apparatuses are classed typically into two types different from each other in direction of output linear motion with respect to the center axis of an input shaft. One of the above two types is known and represented by a ball thread mechanism as being useful for transforming an input rotation motion of a spindle with respect to a ball nut into a relative linear motion between the spindle and the ball nut with accuracy and high rigidity. The ball thread mechanism, however, encounters a drawback that the threaded spindle cannot be freely elongated in such a case that the ball nut or the threaded spindle is required to output a long stroke linear motion with accuracy and high rigidity. It is therefore difficult to utilize the ball thread mechanism for outputting a long stroke linear motion.

The other type is represented by a so-called rack-and-pinion structure comprising a rack rail and a pinion held in mesh with each other. The rack-and-pinion structure is so constructed that an input rotational motion of the pinion is transformed into a straight linear motion of the rack rail by way of a small number of teeth of the rack rail and the pinion meshing with one another. However, the rack rail and the pinion are inevitably required to become large in width in order to obtain a large thrust force for moving the rack rail with respect to the pinion. This results in such a drawback that the rack-and-pinion structure cannot avoid becoming large in size.

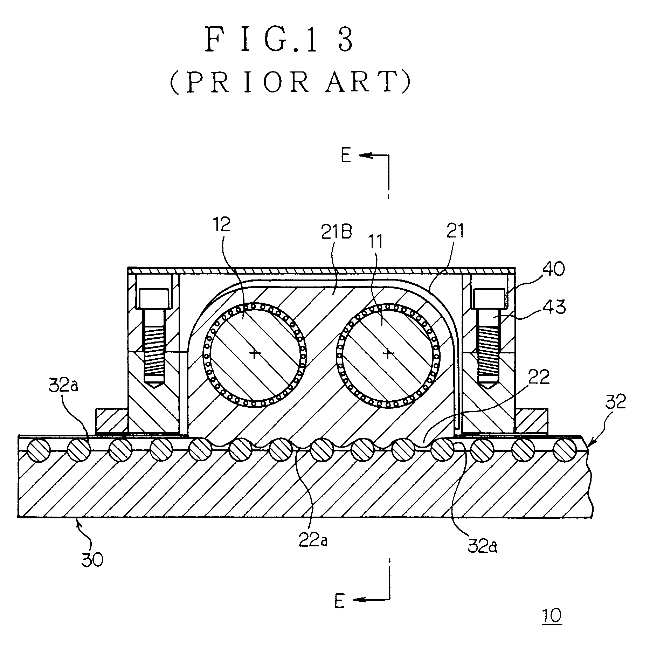

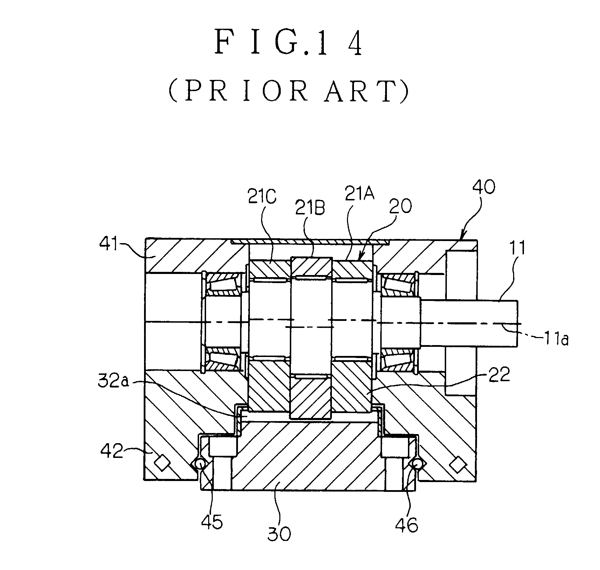

In view of the foregoing drawbacks, there has been proposed an improved motion transforming apparatus 10. The mechanism of the motion transforming apparatus 10 is schematically shown in FIGS. 13 and 14 as comprising first and second rotation shafts 11 and 12, a plate assembly 20, a toothed rail 30, and a plate assembly housing 40. The first rotation shaft 11 is connected to an external drive motor not shown, and driven by the external drive motor to rotate around its rotational center axis 11a. The first and second rotation shafts 11 and 12 are each formed with three parallel crank shaft portions, and rotatable around their respective rotational center axes 11a and 12a. The plate assembly 20 is constituted by three rotation plates 21A, 21B and 21C each having a toothed portion 22 formed with trochoidal teeth 22a, while the toothed rail 30 has a toothed portion 32 formed with semi-circular teeth 32a to be held in mesh with the teeth 22a. The rotation plates 21A to 21C are laterally juxtaposed with one another with their toothed portions 22 laterally adjacent to one another, and each cranked by the first and second rotation shafts 11 and 12 with the rotational center axes 11a, 12a of the rotation shafts 11 and 12 spaced apart from and in parallel relationship with each other. The parallel rotation shafts 11 and 12 are respectively supported by the plate assembly housing 40 which is constituted by upper and lower segments 41 and 42 having the rotation shafts 11 and 12 rotatably received therebetween, and a plurality of bolts 43 having the upper and lower segments 41 and 42 connected to each other. The plate assembly housing 40 is movable along the longitudinal axis of the toothed rail 30 relatively with respect to the toothed rail 30, and has the plate assembly 20 and the rotation shafts 11 and 12 partly accommodated therein.

When the first rotation shaft 11 is driven to rotate clockwise or counter clockwise around its center axis 11a by the external drive motor, the rotation plates 21A to 21C are cranked around the rotational center axes 11a, 12a of the rotation shafts 11 and 12. At this time, the toothed portions 22 of the rotation plates 21A to 21C are in turn brought into pressing contact with part of the toothed portion 32 of the toothed rail 30, and the plate assembly housing 40 is moved by the rotation plates 21A to 21C of the plate assembly 20 through the rotation shafts 11 and 12.

The motion transforming apparatus 10 further comprises guiding means to smoothly guide the plate assembly housing 40 with respect to the toothed rail 30 along the longitudinal axis of the toothed rail 30. The guiding means includes a plurality of guide members and circulation slots. Both of the toothed rail 30 and the plate assembly housing 40 respectively have both side portions each having a groove to receive the plurality of guide members rollable therein to form part of the circulation slots. The guiding means also works to inevitably regulate each distance from the longitudinal axis of the toothed rail 30 to each of the rotational center axes 11a, 12a of the rotation shafts 11 and 12.

In the above improved motion transforming apparatus 10, the toothed rail 30 can be segmented and freely elongated in such a case that the plate assembly housing 40 or the toothed rail 30 is required to output a long stroke linear motion with accuracy and high rigidity, thereby making it possible to utilize the motion transforming mechanism for outputting a long stroke linear motion. In addition, the teeth 22a of the rotation plates 21A to 21C are respectively held in mesh with the teeth 32a of the toothed rail 30 so that the mechanism can output a linear motion with a large thrust force without producing excessive reactive forces exerted on the teeth 22a of the rotation plates 21A to 21C.

The above improved motion transforming apparatus 10, however, still encounters a drawback that the guiding means is not strong enough to regulate each distance from the longitudinal axis of the toothed rail 30 to each of the rotational center axes 11a, 12a of the rotation shafts 11 and 12. Therefore, the distance from the longitudinal axis of the toothed rail 30 to each of the rotational center axes 11a, 12a of the rotation shafts 11 and 12 tend to be varied along the longitudinal axis of the toothed rail 30. This results in clattering noises, vibration and the like by the teeth 22a of the rotation plates 21A to 21C, the teeth 32a of the toothed rail 30 and the guide members of the guiding means. This means that the motion transforming apparatus 10 cannot output a smooth linear motion without making the clattering noises and the like.

Furthermore, the guiding means is easily damaged because the toothed rail 30 have both side portions each having a groove to form part of the circulation slots and the grooves are apt to collect a large amount of dust or particles.

It is therefore an object of the present invention to provide a motion transforming apparatus wherein the plate assembly housing is smoothly movable along the toothed rail relatively with respect to the toothed rail without making clattering noises, vibration and the like.

It is another object of the present invention to provide a motion transforming apparatus which can not be damaged easily.

It is a further object of the present invention to provide a compact motion transforming apparatus simple in structure and light in weight at a low cost.

### SUMMARY OF THE INVENTION

In accordance with the present invention there is provided a motion transforming apparatus for transforming an input rotation motion into a relative linear motion, comprising: first and second rotation shafts each having a rotational center axis and respectively rotatable around the rotational center axes, each of the first and second rotation shafts being formed with at least three crank shaft portions having respective eccentric axes in parallel relationship with one another and to the rotational center axis, the eccentric axes of the crank shaft portions being displaced from and arranged equi-angularly around the rotational center axis of each of the first and second rotation shafts; a plate assembly constituted by at least three rotation plates each having a toothed portion formed with a plurality of teeth spaced apart from one another with a predetermined pitch, the rotation plates being laterally juxtaposed with one another with the toothed portions of the rotation plates laterally adjacent to one another, each of the rotation plates being formed with first and second cranked through bores each having center axis in parallel relationship with each other, and the crank shaft portions of the first and second rotation shafts being rotatably received in the first and second cranked through bores of the rotation plates respectively with the rotational center axes of the first and second rotation shafts spaced apart from and in parallel relationship with each other; a toothed rail having a longitudinal axis extending longitudinally thereof and a mid-longitudinal plane perpendicularly intersected by the center axis of each of the first and second rotation shafts and extending on the longitudinal axis, the toothed rail including a support portion and a toothed portion having a plurality of teeth each protruding from the support portion, and the teeth of the toothed rail being spaced apart from one another with a pitch same as that of the teeth of the rotation plates and held in mesh with the teeth of the rotation plates; a plate assembly housing having the plate assembly and the first and second rotation shafts partly accommodated therein and movable along the longitudinal axis of the toothed rail relatively with respect to the toothed rail; and guiding means for guiding the plate assembly housing with respect to the toothed rail along the longitudinal axis of the toothed rail in such a way that the first distance between the longitudinal axis of the toothed rail and the rotational center axis of the first rotation shaft and the second distance between the longitudinal axis of the toothed rail and the rotational center axis of the second rotation shaft are invariably regulated, wherein the toothed rail further comprises first and second shoulder portions extending in parallel relationship with the longitudinal axis of the toothed rail and arranged in symmetrical with each other with respect to the mid-longitudinal plane of the toothed rail, each of the first and second shoulder portions including upper and lower inclined surfaces each having laterally inner and outer edge lines both extending in parallel in relationship with the longitudinal axis of the toothed rail, laterally outwardly converged in such a way to have the third distance between the laterally outer edge lines smaller than the fourth distance between the laterally inner edge lines, each of the shoulder portions further including a side surface being positioned between the laterally outer edge lines of the first and second inclined surfaces.

### BRIEF DESCRIPTION OF THE DRAWINGS

The features and advantages of a motion transforming apparatus according to the present invention will be more clearly understood from the following description taken in conjunction with the accompanying drawings in which:
FIG. 1 is a squint view of an embodiment of the motion transforming apparatus according to the present invention;
FIG. 2 is an elevational sectional view showing rotation plates, first and second rotation shafts, a plate assembly housing and a toothed rail each forming part of the motion transforming apparatus;
FIG. 3 is a cross-sectional view showing four crank shaft portions of the first rotation shaft;
FIG. 4 is a cross-sectional view showing first and second shoulder portions of the toothed rail;
FIG. 5 is an enlarged cross-sectional view of the shoulder portion of the toothed rail.
FIG. 6 is an elevational view of a guide unit of guiding means forming part of the motion transforming apparatus;
FIG. 7 is a cross-sectional view taken along the line A-A in FIG. 6;
FIG. 8 is a cross-sectional view of an intermediate block of the guide unit;
FIG. 9 is a cross-sectional view taken along the line B-B in FIG. 6;
FIG. 10 is an elevational sectional view taken along the line C-C in FIG. 9 and showing part of the upper circulation slot formed at one of the guide unit;
FIG. 11 is an elevational sectional view taken along the line D-D in FIG. 9 and showing part of the lower circulation slot formed at one of the guide unit;
FIG. 12 is a cross-sectional view of the main segment of a side block of the guide unit;
FIG. 13 is an elevational sectional view of a prior art motion transforming apparatus and showing rotation plates, first and second rotation shafts, a plate assembly housing and a toothed rail each forming part of the prior art motion transforming apparatus; and
FIG. 14 is a cross-sectional view taken along the line E-E in FIG. 13.

### DESCRIPTION OF THE PREFERRED EMBODIMENTS

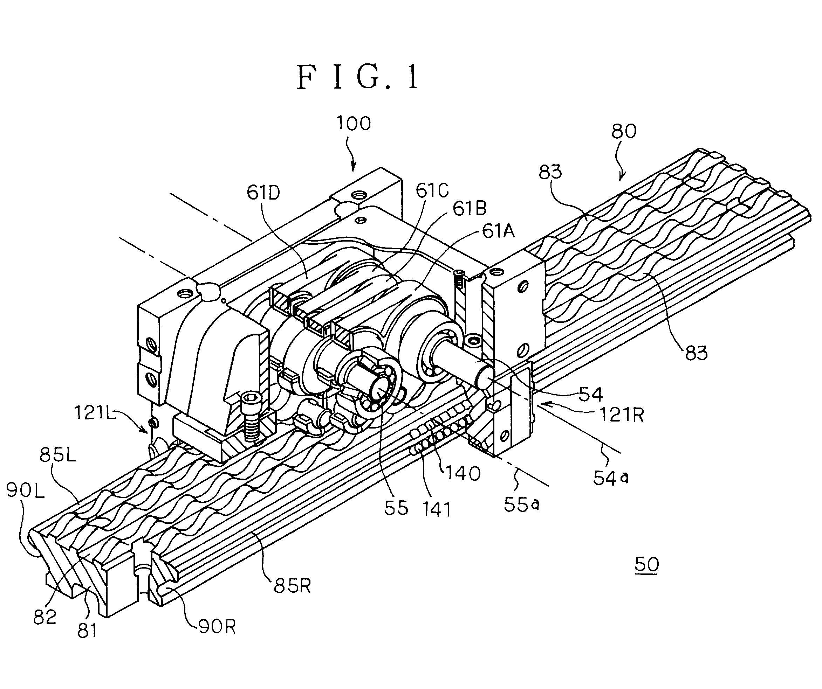

Referring to FIGS. 1 to 3 of the drawings, a preferred embodiment of a motion transforming apparatus 50 embodying the present invention is shown as comprising first and second rotation shafts 54 and 55, a plate assembly 60 assembled together with the first and second rotation shafts 54 and 55, a toothed rail 80 partly facing the plate assembly 60, a plate assembly housing 100 having the first and second rotation shafts 54 and 55 and the plate assembly 60 partly accommodated therein and guiding means 120 for guiding the plate assembly housing 100 with respect to the toothed rail 80 along the longitudinal axis 80a of the toothed rail 80.

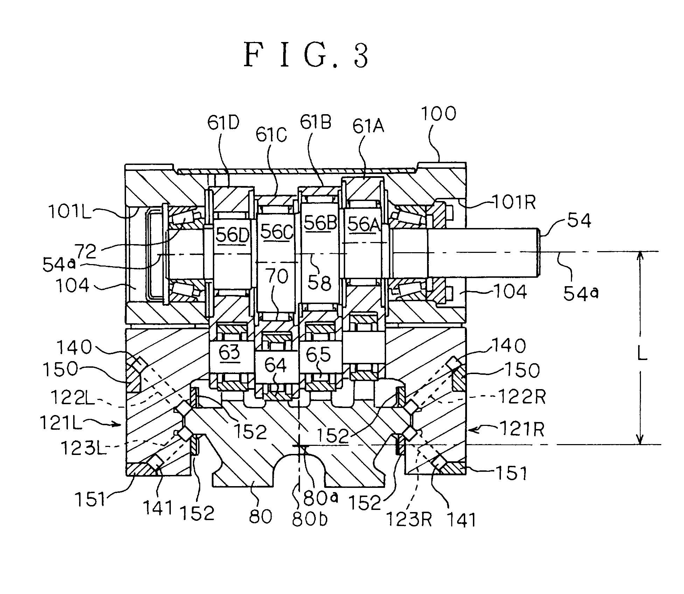

The first and second rotation shafts 54 and 55 have their respective rotational center axes 54a and 55a, and are respectively rotatable around the rotational center axes 54a and 55a. The first rotation shaft 54 is formed with at least three, in this embodiment as shown in FIG. 3, four crank shaft portions 56A, 56B, 56C and 56D each having respective eccentric axes 58A, 58B, 58C and 58D in parallel relationship with one another and to the rotational center axis 54a of the first rotation shaft 54. Similarly, the second rotation shaft 55 is formed with at least three, in this embodiment four crank shaft portions 57A, 57B, 57C and 57D each having respective eccentric axes 59A, 59B, 59C and 59D in parallel relationship with one another and to the rotational center axis 55a of the second rotation shaft 55. The eccentric axes 58A to 58D of the crank shaft portions 56A to 56D and the eccentric axes 59A to 59D of the crank shaft portions 57A to 57D are respectively displaced from and arranged equi-angularly around the rotational center axes 54a and 55a of the first and second rotation shafts 54 and 55.

The plate assembly 60 is constituted by at least three, in this embodiment four rotation plates 61A, 61B, 61C and 61D each having respective toothed portions 62A, 62B, 62C and 62D spaced apart from one another with a predetermined pitch. The teeth 64 of the rotation plates 61A to 61D may be constituted by a plurality of cylindrical pins 64a, and the cylindrical pins 64a are rotatably supported by the rotation plates through a plurality of needle roller bearings 65. The cylindrical pins 64a may be made of a self-lubricating material. The rotation plates 61A to 61D are laterally juxtaposed with one another with the toothed portions 62A to 62D of the rotation plates 61A to 61D laterally adjacent to one another.

Each of the rotation plates 61A to 61D is formed with first and second cranked through bores 66A, 66B, 66C and 66D and 67A, 67B, 67C and 67D each having respective center axes 68A, 68B, 68C and 68D and 69A, 69B, 69C and 69D in parallel relationship with one another. The crank shaft portions 56A to 56D of the first rotation shaft 54 and the crank shaft portions 57A to 57D of the second rotation shaft 55 are rotatably received through a plurality of needle roller bearings 70A, 70B, 70C and 70D and 71A, 71B, 71C and 71D in the first and second cranked through bores 66A to 66D and 67A to 67D of the rotation plates 61A to 61D, respectively, with the rotational center axes 54a and 55a of the first and second rotation shafts 54 and 55 spaced apart from and in parallel relationship with each other. To assemble the first and second rotation shafts 54 and 55 with the rotation plates 61A to 61D, the cranked through bores 66B, 67B, 66C and 67C of the rotation plate 61B and 61C are larger in diameter than those of the other two rotation plates 61A and 61D as well as the crank shaft portions 56B, 57B, 56Cand 57C are larger in diameter than the crank shaft portions 56A, 57A, 56D and 57D.

The toothed rail 80 has a longitudinal axis 80a extending longitudinally thereof and a mid-longitudinal plane 80b perpendicularly intersected by the center axis 54a and 55a of each of the first and second rotation shafts 54 and 55 and extending on the longitudinal axis 80a of the toothed rail 80.

The toothed rail 80 comprises a support portion 81 and a toothed portion 82 having a plurality of rail members 84 arranged in a line to extend along the longitudinal axis 80a of the toothed rail 80 and a plurality of teeth 83 each protruding from the support portion 81. The teeth 83 of the toothed rail 80 are formed with a plurality of wave-like, e.g., trochoidal or cycloidal teeth 83 spaced apart from one another with a pitch same as that of the teeth 64 of the rotation plates 61A to 61D, and held in mesh with the teeth 64 of the rotation plates 61A to 61D. The trochoidal teeth 83 of the toothed portion 82 of the toothed rail 80 constructed as above upwardly face the teeth 64 of the toothed portions 62A to 62D of the rotation plates 61A to 61D.

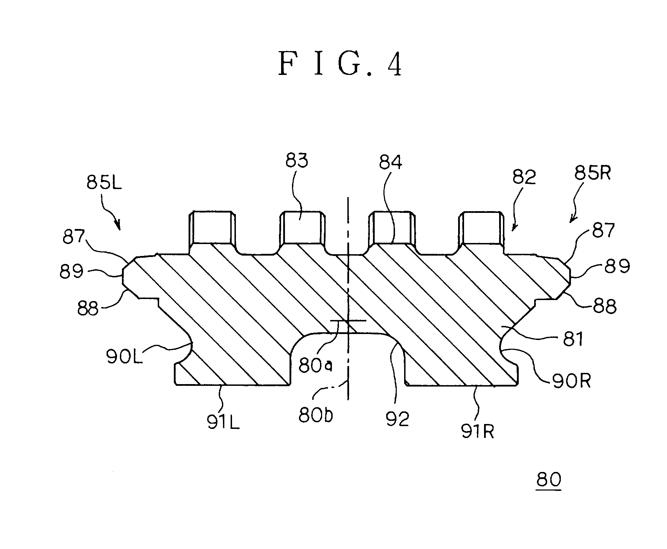

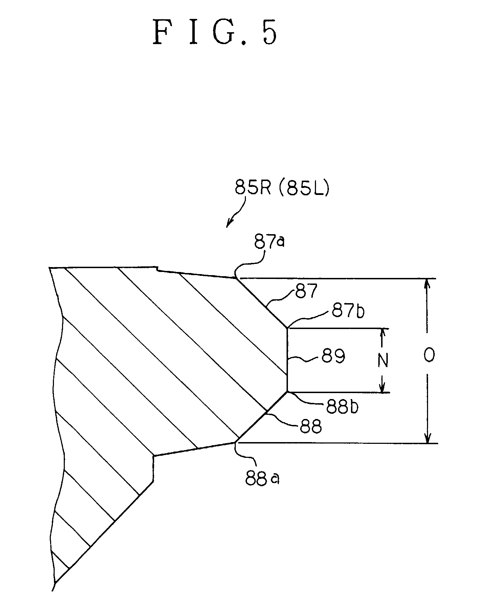

Referring to FIGS. 4 and 5, the toothed rail 80 further comprises first and second shoulder portions 85R, 85L both extending in parallel relationship with the longitudinal axis 80a of the toothed rail 80 and arranged in symmetrical with each other with respect to the mid-longitudinal plane 80b of the toothed rail 80. Each of the first and second shoulder portions 85R, 85L includes upper and lower inclined surfaces 87, 88 each having laterally inner and outer edge lines (87a, 88a), (87b, 88b) both extending in parallel in relationship with the longitudinal axis 80a of the toothed rail 80. The upper and lower inclined surfaces 87, 88 are laterally outwardly converged in such a way to have the distance N between the laterally outer edge lines 87b, 88b smaller than the distance O between the laterally inner edge lines 87a, 88a. Each of the shoulder portions 85R, 85L further includes a side vertical surface 89 being positioned between the laterally outer edge lines 87b, 88b. The upper inclined surface 87 is in perpendicular relationship with respect to the lower inclined surface 88 in this embodiment, however, the upper inclined surface 87 may be inclined and take any degree with respect to the lower inclined surface 88.

The toothed rail 80 further includes a pair of bottom surfaces 91R, 91L laterally spaced apart from each other and extending in parallel relationship with the longitudinal axis 80a of the toothed rail 80. The toothed rail 80 is formed with a bottom cavity 92 longitudinally extending between the lower surfaces 91R, 91L of the toothed rail 80 and with first and second side cavities 90R, 90L longitudinally extending and arranged in symmetrical with each other with respect to the mid-longitudinal plane 80b of the toothed rail 80. Each of the side cavities 90R, 90L are disposed between the shoulder portions 85R, 85L and the pair of bottom surfaces 91R and 91L respectively. Each of the first and second shoulder portions 85R, 85L is positioned closer to the toothed portion 82 than to the respective bottom surfaces 91R, 91L.

The toothed rail 80 may be formed with a flat surface without a plurality of small grooves or hollows. Therefore the toothed rail 80 is first roughly produced by a drawing process, then the toothed portion 82, the shoulder portions 85R, 85L and the bottom surfaces 91R, 91L are formed precisely by machining processes.

The toothed rail 80 is mounted at the pair of bottom surfaces 91R, 91L on a certain stationary member not shown but may be supported by a movable support member.

As the first and second shoulder portions 85R, 85L of the toothed rail 80 in this embodiment longitudinally extend and laterally protrude from both sides of the toothed portion 82 of the toothed rail 80, the toothed portion 82 of the toothed rail 80 is reinforced by the first and second shoulder portions 85R, 85L and the toothed rail 80 is thus strengthened.

Furthermore, the first and second side cavities 90R, 90L formed at both sides of the support portion 81 of the toothed rail 80 and disposed between the shoulder portions 85R, 85L and the pair of bottom surfaces 91R and 91L respectively do not have a large amount of dust or particles accumulated thereon.

The toothed rail 80 can easily be produced by a drawing process which makes it possible to produce the toothed rail 80 with a single material.

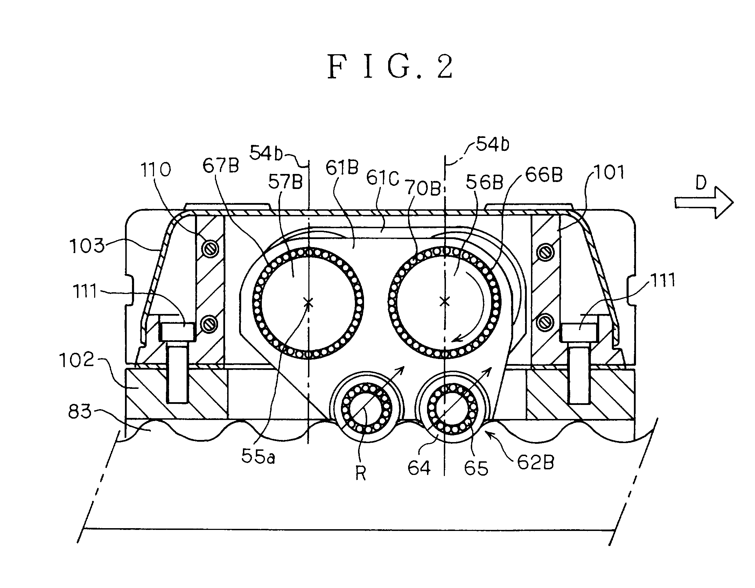

Referring back to FIG. 2, the plate assembly housing 100 is constituted by a pair of upper housing segments 101R, 101L laterally disposed and firmly connected to each other by a plurality of bolts 110, a pair of lower housing segments 102F, 102R longitudinally spaced apart from each other to receive part of the plate assembly 60 therebetween and each connected to the upper housing segments 101R, 101L by a plurality of bolts 111 and a cover plate 103 detachably mounted on the pair of upper housing segments 101R, 101L by a plurality of bolts 112.

Each of the upper housing segments 101R, 101L has a pair of coaxial circular holes 104, 105 to have the first and second rotation shafts 54 and 55 respectively received therein. The rotation shafts 54 and 55 are respectively supported by the plate assembly housing 100 through a plurality of roller bearings 72 and 73.

The plate assembly housing 100 is movable along the longitudinal axis 80a of the toothed rail 80 relatively with respect to the toothed rail 80, and has the plate assembly 60 and the first and second rotation shafts 54 and 55 partly accommodated therein.

In order to linearly move the plate assembly housing 100 relatively with respect to the toothed rail 80, the toothed portion 82 of the toothed rail 80 is adapted to be pressed by the toothed portions 62 of the rotation plates 61A to 61D when each pair of the crank shaft portions 56A and 57A, 56B and 57B, 56C and 57C or 56D and 57D of the rotation shafts 54 and 55 received in the first and second cranked through bores 66A to 66D and 67A to 67D of each rotation plate 61A to 61D are positioned within their predetermined cranking angle ranges identical to each other around the rotational center axes 54a and 55a of the first and second rotation shafts 54 and 55.

The first rotation shaft 54 supported by the plate assembly housing 100 has a first central plane 54b passing through the rotational center axis 54a of the first rotation shaft 54 and perpendicular to the longitudinal axis 80a of the toothed rail 80, while the second rotation shaft 55 has a second central plane 55b passing through the rotational center axis 55a of the second rotation shaft 55 and perpendicular to the longitudinal axis 80a of the toothed rail 80.

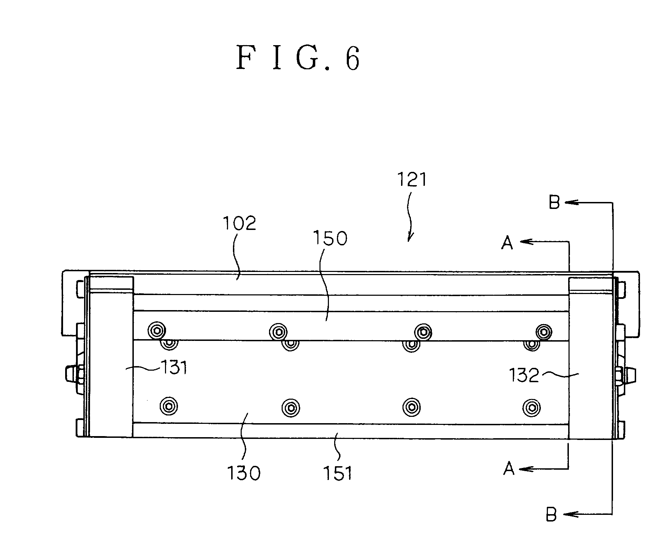

The guiding means 120 comprises a pair of guide units 121 as shown in FIG. 6, laterally disposed to have the toothed rail 80 intervene therebetween and secured to the respective lower ends of the lower housing segments 102 of the plate assembly housing 100 to smoothly guide the plate assembly housing 100 with respect to the toothed rail 80 along the longitudinal axis 80a of the toothed rail 80 with the first distance L between said longitudinal axis 80a of said toothed rail 80 and said rotational center axis 54a of said first rotation shaft 54 and the second distance M not shown, between said longitudinal axis 80a of said toothed rail 80 and said rotational center axis 55a of said second rotation shaft 50 invariably regulated.

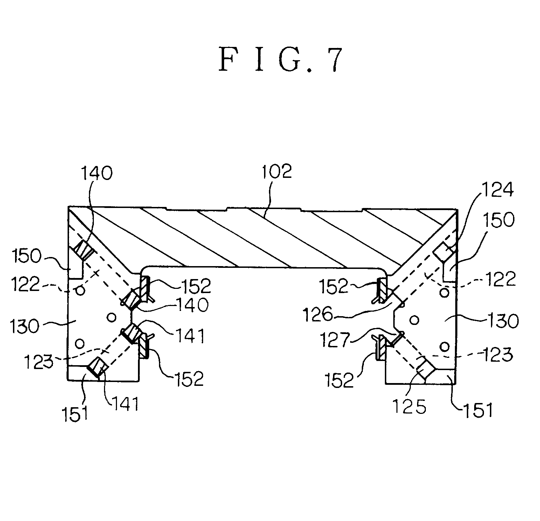

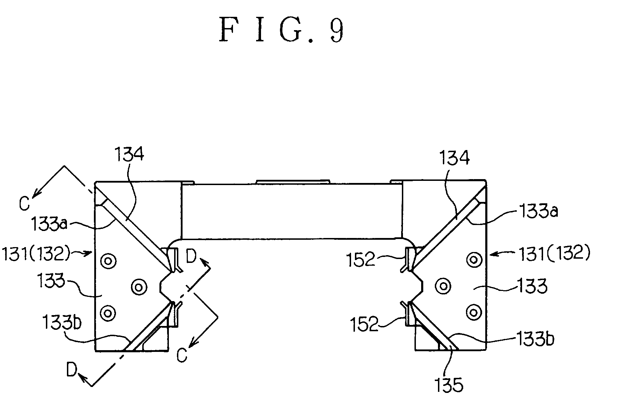

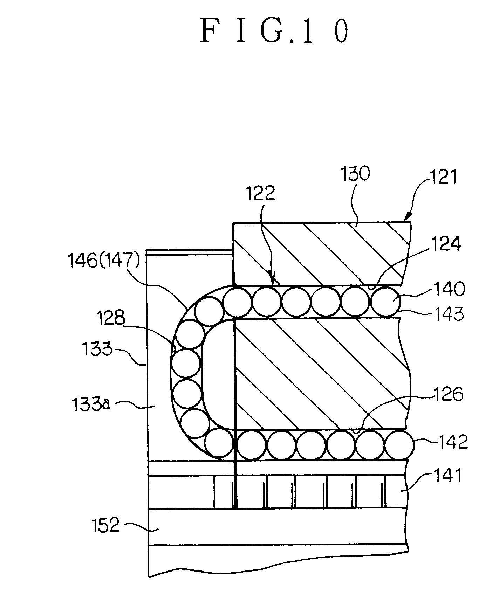

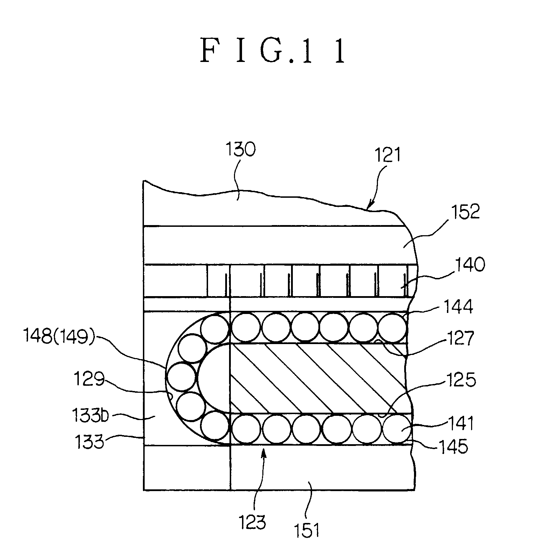

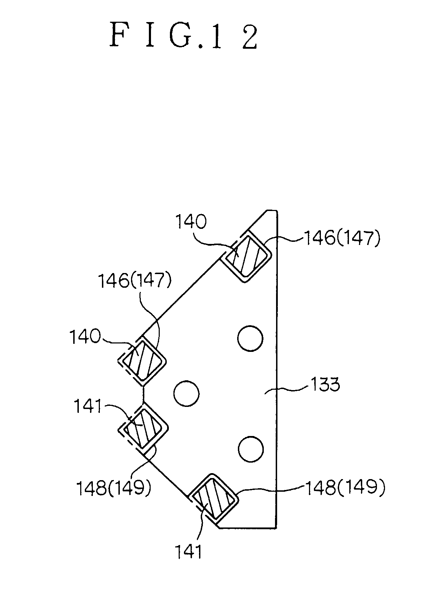

Referring to FIGS. 7 to 12, the guiding means 120 comprises upper and lower circulation slots 122, 123 each including a pair of straight line sections 142 and 143, 144 and 145 having longitudinal ends and a pair of arcuate line sections 146 and 147, 148 and 149 each having arcuate ends respectively connected to the longitudinal ends of the straight line sections 142 and 143, 144 and 145 wherein each of the straight line sections 142, 143, 144 or 145 is in the form of rectangular shape in cross-section taken along the central plane 54b and 55b of each of the first and second rotation shafts 54, 55. The guiding means 120 further comprises upper and lower groups of guide members 140, 141 respectively received in the upper and lower circulation slots 122, 123 to be held in rolling contact with the upper and lower inclined surfaces 87, 88 of the shoulder portions 85R, 85L of the toothed rail 80.

Referring to FIGS. 6 to 8, each of the guide units 121 of the guiding means 120 comprises an intermediate block 130 comprising upper and lower holes 124, 125 and upper and lower grooves 126, 127 extending in parallel relationship with the longitudinal axis 80a of the toothed rail 80 and forming part of straight line sections 142, 143, 144 and 145 of the upper and lower circulation slots 122, 123. Each of the guide units 121 further comprises upper and lower retainer members 150, 151 and inner retainer members 152 each longitudinally extending. Each of the upper and lower retainer members 150 and 151 has an inclined surface 150a, 151a and is securely connected to the intermediate blocks 130 to retain the upper and lower groups of guide members 140, 141 of the guiding means 120 respectively with the inclined surface 150a of the upper retainer member 150 forming one side of the upper hole 124 of intermediate block 130 and the inclined surface 151a of the lower retainer member 151 forming one side of the lower hole 125 of intermediate block 130 in such a way to have the upper and lower groups of guide members 140, 141 of the guiding means 120 respectively held in rolling contact with the inclined surfaces 150a, 151a of the upper and lower retainer members 150, 151. The holes 124 and 125 thus formed are served as straight line sections 143, 145 of the guiding means 120. Each of the upper and lower grooves 126, 127 is forming part of the straight line sections 142, 144 of the guiding means 120 in cooperation with the upper and lower inclined surfaces 87, 88 of the toothed rail 80 with the upper inclined surface 87 of the toothed rail 80 forming one side of the straight line section 142 and the lower inclined surface 88 of the toothed rail 80 forming one side of the straight line section 144. Each of the inner retainer members is securely connected to the inner side of the guide units 121 to retain the upper and lower groups of guide members 140 and 141 of the guiding means 120 respectively.

Referring to FIGS. 6 and 9 to 12, each of the guide units 121 of the guiding means 120 further comprises first and second end blocks 131, 132 longitudinally spaced apart from each other and having the intermediate block 130 intervene therebetween and firmly connected to the intermediate block 130. Each of the first and second end blocks 131, 132 of the guiding means 120 includes a main segment 133 and upper and lower segments 134, 135 in which the main segment 133 has upper and lower inclined surfaces 133a, 133b each formed with an arcuate groove 128, 129 and the upper and lower segments 134, 135 respectively securely connected to the main segment 133 in such a way to have the upper and lower inclined surfaces 133a, 133b of the main segment 133 respectively held in contact with the lower surface of the upper segment 134 and the upper surface of the lower segment 135 to form the arcuate line sections 146 and 147, 148 and 149 of the upper and lower circulation slots 122, 123.

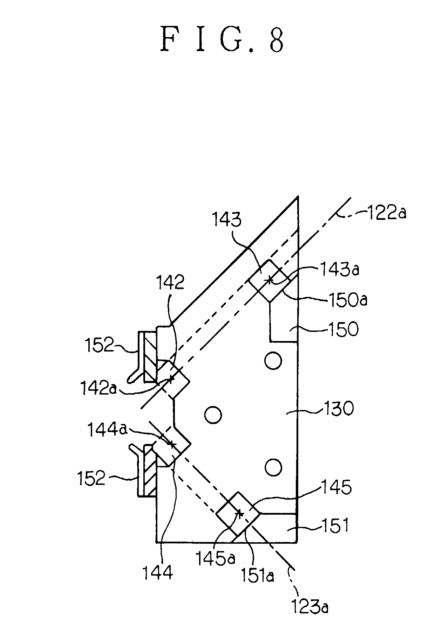

Referring back to FIG. 8, each of the straight line sections 142, 143, 144 and 145 of the upper and lower circulation slots 122, 123 of the guiding means 120 has a center axis 142a, 143a, 144a and 145a and each of the upper and lower circulation slots 122, 123 having a center plane 122a or 123a having the center axes of the straight line sections 142 and 143, 144 and 145 respectively pass on, the center plane 122a of the upper slot 122 is in perpendicular relationship with respect to the center plane 123a of the lower slot 123 in this embodiment. The center plane 122a of the upper slot 122 may be inclined and may take any degree with respect to the center plane 123a of the lower slot 123.

As is understood from foregoing description, the upper circulation slot 122 is formed with the straight line sections 142 and 143 and the arcuate line sections 146 and 147, and the lower circulation slot 123 is formed with the straight line sections 144 and 145 and the arcuate line sections 148 and 149. The guide units 121 of the guiding means 120 are formed with parts such as the intermediate blocks 130 including the holes 124, 125 and the grooves 126, 127 forming part of the straight line sections 142, 143, 144 and 145, the main segments 133 including the arcuate grooves 128, 129 forming part of the arcuate line sections 146, 147, 148 and 149, upper and lower segments 134, 135 of first and second end blocks 131, 132 and retainer members 150, 151 and 152. As the each of the parts can be easily produced at a low cost, the guide units 121 of the guiding means 120 can be easily produced as well by assembling the parts.

Furthermore, the guide units 121 are supported by the upper and lower groups of guide members 140, 141. This result in the fact that the pressing forces of the guide units 121 and the plate assembly housing 100 including the rotation plates 61A to 61D against each of the guide members 140, 141 of the guiding means 120 are small compared to the pressing forces of the plate assembly housing 40 including the rotation plates 21A to 21C against the guide members of the guiding means of the prior art motion transforming apparatus 10. Therefore the guide members 140, 141 of the guiding means 120 can not be damaged easily.

Yet furthermore, each of the first and second shoulder portions 85R, 85L includes upper and lower inclined surfaces 87, 88 instead of the grooves formed at the toothed rail 30 of the prior art motion transforming apparatus 10 to form a part of the circulation slots 122, 123 of the guiding means 120. This result in the fact that the inclined surfaces 87, 88 of the toothed rail 80 do not have a large amount of dust or particles. Therefore the guiding means 120 can not be damaged easily.

The above first rotation shaft 54 is elongated at one end portion 54d and connected to an external drive motor or other driving mechanism not shown. The first rotation shaft 54 is adapted to be driven by the input rotation motion from the external drive motor and to rotate the rotation plates 61A to 61D around the rotational center axes 54a and 55a of the first and second rotation shafts 54 and 55 in cooperation with the second rotation shaft 55 in such a manner that the rotation plates 61A to 61D are cranked by the crank shaft portions 56A to 56D and 57A to 57D of the rotation shafts 54 and 55 to trace respective circular parallel-displacement paths. The input rotation motion of the first rotation shaft 54 is controlled by a controller, not shown, to determine the rotational angle or the number of rotations to have the plate assembly housing 100 linearly move along the toothed rail 80 by a certain amount of displacement relatively with respect to the toothed rail 80. The above drive motor are mounted on and supported by a stationary support member or a support member movable along the longitudinal axis 80a of the toothed rail 80 relatively with respect to the toothed rail 80. The plate assembly housing 100 and the above drive motor are thus regulated to move relatively with respect to each other on the support member.

The above linear motion of the plate assembly housing 100 or the toothed rail 80 may include straight motion, curvilinear motion and other substantially linear motion.

The operation of the motion transforming apparatus 50 will be described hereinlater.

Firstly, the first rotation shaft 54 is driven by the input rotation motion from the above external drive motor. The angle of the input rotation is controlled by the drive motor and the above controller to move the plate assembly housing 100 by a necessary displacement amount relatively with respect to the toothed rail 80. At this time, the rotation plates 61A to 61D are each rotated by the input rotation motion of the first rotation shaft 54 under the state that the rotation plates 61A to 61D are respectively cranked to be displaced equi-angularly from one another by the crank shaft portions 56A to 56D and 57A to 57D of the first and second rotation shafts 54 and 55.

Under these conditions, the rotation plates 61A to 61D have their rotational phases every 90 degrees, and the semi-circular teeth 64 of the each rotation plate 61A to 61D are brought into pressing contact with the trochoidal teeth 83 of the toothed rail 80 when the teeth 64 of the each rotation plate 61A to 61D alternately come close to the dedendum portions of the teeth 83 of the toothed rail 80 from the addendum portions while the crank shaft portions 56A to 56D and 57A to 57D of the first and second rotation shafts 54 and 55 rotate respectively around the rotational center axes 54a and 55a of the first and second rotation shafts 54 and 55. Therefore, the trochoidal teeth 83 of the toothed rail 80 is continuously partly pressed by the semi-circular teeth 64 of at least one of the rotation plates 61A to 61D while the teeth 64 of each rotation plate 61A to 61D come to be held in meshing engagement with the teeth 83 of the toothed rail 80 at a displaced angle of 90 degrees.

The mechanism of this type of motion transforming apparatus is disclosed in detail in the US Patent applications No. 5,582,068 and No. 5,699,604, thus is not described in detail in this application.

When the first rotation shaft 54 is driven to rotate clockwise as shown in FIG. 2, the trochoidal teeth 83 of the toothed rail 80 is partly pressed by the semi-circular teeth 64 of at least one rotation plate 61A, 61B, 61C or 61D to produce reactive forces inclined to right as shown by the arrows R. At this time, the plate assembly housing 100 is moved by the reactive forces R toward right along the longitudinal axis 80a of the toothed rail 80 relatively with respect to the toothed rail 80, as shown by an arrow D, in spite of the fact that the reactive forces R act on the rotation plates 61A to 61D not only as thrust forces but also as the upward forces which tend to lift up and separate the rotation plates 61A to 61D from the toothed portion 82 of the toothed rail 80.

When, on the other hand, the first rotation shaft 54 is driven to rotate counter clockwise, the reactive forces are inclined to left. At this time, the plate assembly housing 100 is moved by the reactive forces toward left along the longitudinal axis 80a of the toothed rail relatively with respect to the toothed rail 80, in spite of the fact that the reactive forces act on the rotation plates 61A to 61D not only as thrust forces but also as the upward forces which tend to lift up and separate the rotation plates 61A to 61D from the toothed portion 82 of the toothed rail 80

By the reason that the toothed rail 80 of the motion transforming apparatus 50 in the present invention comprises the first and second shoulder portions 85R, 85L each including upper and lower inclined surfaces 87, 88 to form part of the straight line sections 142, 143, 144 and 145 of the upper and lower circulation slots 122, 123 of the guide units 121, the connection between the toothed rail 80 and the guide units firmly connected to the rotation plates 61A to 61D are strengthened by the both upper and lower circulation slots 122, 123. Therefore each distance L and M from the longitudinal axis 80a of the toothed rail 80 to each of the rotational center axes 54a and 55a of the rotation shafts 54 and 55 can be regulated and can not be varied even when the upward forces of the reactive forces R try to lift up the rotation plates 61A to 61D from the toothed portion 82 of the toothed rail 80.

This makes it possible to provide a motion transforming apparatus 50 which can output a linear motion smoothly and accurately in response to the input rotation motion of the first rotation shaft 54 without making clattering noises, vibration or the like by preventing the rotation plates 61A to 61D from being lifted up and bent or elastically twisted.

The guiding means 120 can also smoothly guide the plate assembly housing 100 along the toothed rail 80 relatively with respect to the toothed rail 80 without having a large amount of dust or particles. Therefore, the motion transforming apparatus 50 in the present invention can not be damaged easily.

Consequently, the above motion transforming apparatus 50 comprising the toothed rail 80 having the shoulder portions 85R, 85L can be produced at a low cost and come to be of compact size, mechanical simplicity and light weight.

It will therefore be understood from the foregoing description that the toothed rail 80 and the guiding means 120 are different from those of the prior art motion transforming apparatus in shape, and so modified as to ensure the rigid connection between the toothed rail 80 and the guiding means 120.

While the present invention has thus been shown and described with reference to the specific embodiment, however, it should be noted that the invention is not limited to the illustrated structures but changes and modifications may be made without departing from the scope of the appended claims.

## Claims

1. A motion transforming apparatus (50) for transforming an input rotation motion into a relative linear motion, comprising:
first and second rotation shafts (54, 55) each having a rotational center axis (54a, 55a) and respectively rotatable around said rotational center axes (54a, 55a), each of said first and second rotation shafts (54, 55) being formed with at least three crank shaft portions ((56A, 56B, 56C or 56D) or (57A, 57B, 57C or 57D)) having respective eccentric axes ((58A, 58B, 58C or 58D) or (59A, 59B, 59C or 59D)) in parallel relationship with one another and to said rotational center axis (54a, 55a), said eccentric axes ((58A, 58B, 58C or 58D) or (59A, 59B, 59C or 59D)) of said crank shaft portions ((56A, 56B, 56C or 56D) or (57A, 57B, 57C or 57D)) being displaced from and arranged equi-angularly around said rotational center axis (54a, 55a) of each of said first and second rotation shafts (54, 55);
a plate assembly (60) constituted by at least three rotation plates (61A, 61B, 61C or 61D) each having a toothed portion (62A, 62B, 62C or 62D) formed with a plurality of teeth (64) spaced apart from one another with a predetermined pitch, said rotation plates (61A, 61B, 61C or 61D) being laterally juxtaposed with one another with said toothed portions (62A, 62B, 62C or 62D) of said rotation plates (61A, 61B, 61C or 61D) laterally adjacent to one another, each of said rotation plates (61A, 61B, 61C or 61D) being formed with first and second cranked through bores ((66A, 66B, 66C or 66D) and (67A, 67B, 67C or 67D)) each having center axis ((68A, 68B, 68C or 68D) or (69A, 69B, 69C or 69D)) in parallel relationship with each other, and said crank shaft portions ((56A, 56B, 56C or 56D) or (57A, 57B, 57C or 57D)) of said first and second rotation shafts (54, 55) being rotatably received in said first and second cranked through bores ((66A, 66B, 66C or 66D) or (67A, 67B, 67C or 67D)) of said rotation plates (61A, 61B, 61C or 61D) respectively with said rotational center axes (54a, 55a) of said first and second rotation shafts (54, 55) spaced apart from and in parallel relationship with each other;
a toothed rail (80) having a longitudinal axis (80a) extending longitudinally thereof and a mid-longitudinal plane (80b) perpendicularly intersected by said center axis (54a, 55b) of each of said first and second rotation shafts (54, 55) and extending on said longitudinal axis (80a), said toothed rail (80) including a support portion (81) and a toothed portion (82) having a plurality of teeth (83) each protruding from said support portion (81), and said teeth (83) of said toothed rail (80) being spaced apart from one another with a pitch same as that of the teeth (64) of said rotation plates (61A, 61B, 61C or 61D) and held in mesh with said teeth (64) of said rotation plates (61A, 61B, 61C or 61D);
a plate assembly housing (100) having said plate assembly (60) and said first and second rotation shafts (54, 55) partly accommodated therein and movable along said longitudinal axis (80a) of said toothed rail (80) relatively with respect to said toothed rail (80); and
guiding means (120) for guiding said plate assembly housing (100) with respect to said toothed rail (80) along said longitudinal axis (80a) of said toothed rail (80) in such a way that the first distance (L) between said longitudinal axis (81a) of said toothed rail (80) and said rotational center axis (54a) of said first rotation shaft (54) and the second distance (M) between said longitudinal axis (81a) of said toothed rail (80) and said rotational center axis (55a) of said second rotation shaft (55) are invariably regulated,
wherein said toothed rail (80) further comprises first and second shoulder portions (85R, 85L) extending in parallel relationship with said longitudinal axis (80a) of said toothed rail (80) and arranged in symmetrical with each other with respect to said mid-longitudinal plane (80b) of said toothed rail (80), each of said first and second shoulder portions (85R, 85L) including upper and lower inclined surfaces (87, 88) each having laterally inner and outer edge lines ((87a, 88a), (87b, 88b)) both extending in parallel in relationship with said longitudinal axis (80a) of said toothed rail(80), laterally outwardly converged in such a way to have the third distance (N) between said laterally outer edge lines (87b, 88b) smaller than the fourth distance (O) between said laterally inner edge lines (87a, 88a), each of said shoulder portions (85R, 85L) further including a side surface (89) being positioned between said laterally outer edge lines (87b, 88b) of said first and second inclined surfaces (87, 88).

2. A motion transforming apparatus (50) as set forth in claim 1, wherein said toothed rail (80) further has a bottom surface (91) extending in parallel in relationship with said longitudinal axis (80a) of said toothed rail (80) and is formed with first and second side cavities (90R, 90L) longitudinally extending and arranged in symmetrical with each other with respect to said mid-longitudinal plane (80b) of said toothed rail (80), each of said side cavities (90R, 90L) being disposed between said shoulder portions (85R, 85L) and said bottom surface (91), and each of said first and second shoulder portions (85R, 85L) being positioned closer to said toothed portion (82) than to said bottom surface (91).

3. A motion transforming apparatus (50) as set forth in claim 2, wherein said toothed rail (80) is formed with a bottom cavity (92) longitudinally extending in the middle of said bottom surface (91) of said toothed rail (80) to separate said bottom surface (91) into a pair of bottom surfaces (91R, 91L) in symmetrical with each other with respect to said mid-longitudinal plane (80b) of said toothed rail (80).

4. A motion transforming apparatus (50) as set forth in claim 3, wherein said guiding means (120) further comprises a pair of guide units (121R, 121L) laterally disposed to have said toothed rail (80) intervene therebetween and secured to the respective lower ends of said plate assembly housing (100) to smoothly guide said plate assembly housing (100) with respect to said toothed rail (80) along said longitudinal axis (80a) of said toothed rail (80).

5. A motion transforming apparatus (50) as set forth in claim 4, wherein each of said guide units (121R, 121L) comprises upper and lower circulation slots (122, 123) each having a pair of straight line sections ((142, 143), (144, 145)) having longitudinal ends and a pair of arcuate line sections ((146, 147), (148, 149)) each having arcuate ends respectively connected to said longitudinal ends of said straight line sections ((142, 143), (144, 145)), and upper and lower groups of guide members (140, 141) respectively received in said upper and lower circulation slots (122, 123) to be held in rolling contact with said upper and lower inclined surfaces (87, 88) of said shoulder portions (85R, 85L) of said toothed rail (80).

6. A motion transforming apparatus (50) as set forth in claim 5, wherein each of said straight line sections ((142, 143), (144, 145)) of said upper and lower circulation slots (122, 123) has a center axis ((142a, 143a), (144a, 145a)) and each of said upper and lower circulation slots (122, 123) having a center plane (122a, 123a) having said center axes ((142a, 143a), (144a, 145a)) of said straight line sections ((142, 143), (144, 145)) pass on, said center plane (122a) of said upper slot (122) being inclined with respect to said center plane (123a) of said lower slot (123).

7. A motion transforming apparatus (50) as set forth in claim 6, wherein said center plane (122a) of said upper slot (122) is in perpendicular relationship with respect to said center plane (123a) of said lower slot (123).

8. A motion transforming apparatus (50) as set forth in claim 7, wherein each of said guide units (121R, 121L) of said guiding means (120) further comprises;
an intermediate block (130) comprising upper and lower holes (124, 125) longitudinally extending and forming a part of straight line sections (143, 145) of said upper and lower circulation slots (122, 123) and upper and lower grooves (126, 127) longitudinally extending and forming part of straight line sections (142, 144) of said upper and lower circulation slots (122, 123) in cooperation with said upper and lower inclined surfaces (87, 88) of said toothed rail (80), and
first and second end blocks (131, 132) spaced apart from each other and having said intermediate block (130) intervene therebetween and firmly connected to said intermediate block (130), each of said first and second end blocks (131, 132) comprising a main segment (133) and upper and lower segments (134, 135), said main segment (133) having upper and lower inclined surfaces (133a, 133b) each formed with an arcuate groove (128, 129), said upper and lower segments (134, 135) respectively securely connected to said main segment (133) in such a way to have said upper and lower inclined surfaces (133a, 133b) of said main segment (133) respectively held in contact with the lower surface of said upper segment (134) and the upper surface of said lower segment (135) to form said arcuate line sections ((146, 147), (148, 149)) of said upper and lower circulation slots (122, 123).

9. A motion transforming apparatus (50) as set forth in claim 8, wherein said first rotation shaft (54) has a first central plane (54b) passing through said rotational center axis (54a) of said first rotation shaft (54) and perpendicular to said longitudinal axis (80a) of said toothed rail (80), and said second rotation shaft (55) has a second central plane (55b) passing through said rotational center axis (55a) of said second rotation shaft (55) and perpendicular to said longitudinal axis (80a) of said toothed rail (80), and wherein said upper and lower holes (124, 125) of each of said intermediate blocks (130) is in the form of rectangular in cross-section taken along said central plane (54b, 55b) of each of said first and second rotation shafts (54, 55), each of said guide units (121R, 121L) further comprises upper and lower retainer members (150, 151) extending in parallel relationship with said longitudinal axis (80a) of said toothed rail (80) and each of said upper and lower retainer members (150, 151) having an inclined surface (150a, 151a), said upper and lower retainer members (150, 151) securely connected to said intermediate blocks (130) to retain said upper and lower groups of guide members (140, 141) of said guide units (121R, 121L) respectively with said inclined surface (150a) of said upper retainer member (150) forming one side of said upper hole (124) of said intermediate block (130) and said inclined surface (151a) of said lower retainer member (151) forming one side of said lower hole (125) of said intermediate block (130) in such a way to have said upper and lower groups of guide members (140, 141) of said guide units (121R, 121L) respectively held in rolling contact with said inclined surfaces (150a, 151a) of said upper and lower retainer members (150, 151).

10. A motion transforming apparatus (50) as set forth in claim 2, wherein said toothed rail (80) is made of a single material produced by a drawing process.
